# EUROPEAN PATENT APPLICATION

(11) **EP 4 503 229 A1**
(43) Date of publication of application: **05.02.2025**
(21) Application number: 23779700.6
(22) Date of filing: 16.03.2023
(51) Int. Cl.: H01M 10/0567, H01M 4/133, H01M 4/36, H01M 4/48, H01M 4/62, H01M 10/052

(54) **NON-AQUEOUS ELECTROLYTE SECONDARY BATTERY**

(30) Priority: 30.03.2022 JP 2022056703
(71) Applicant: Panasonic Intellectual Property Management Co., Ltd., Osaka-shi, Osaka 540-6207 (JP)
(72) Inventor: WATARIGAWA, Shohei, Osaka 571-0057 (JP)
(74) Representative: Eisenführ Speiser
(86) International application number: PCT/JP2023/010454
(87) International publication number: WO 2023/189682

(57) **Abstract**

A non-aqueous electrolyte secondary battery according to one embodiment of the present invention comprises a positive electrode 11, a negative electrode 12, and a non-aqueous electrolyte. The negative electrode 12 contains graphite, a Si-containing material, and carbon nanotubes. The non-aqueous electrolyte includes at least one compound selected from the group consisting of first compounds represent by formula 1 and second compounds represented by formula 2.

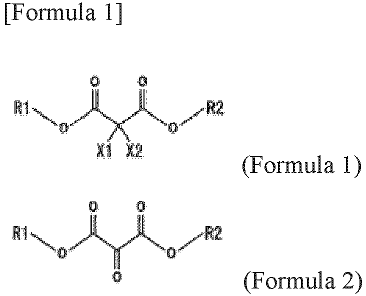

## Description

### TECHNICAL FIELD

The present disclosure relates to a non-aqueous electrolyte secondary battery.

### BACKGROUND ART

In recent years, non-aqueous electrolyte secondary batteries such as lithium-ion batteries have been widely applied for use requiring a high capacity, such as on-board use and power storage use. The non-aqueous electrolyte secondary battery is required to have excellent high-speed charge-discharge performance and cycle characteristics while keeping the high capacity. For example, Patent Literature 1 and 2 discloses a non-aqueous electrolyte secondary battery using graphite and a Si-containing material in combination as a negative electrode active material in order to achieve both high capacity and excellent cycle characteristics. In addition, Patent Literature 1 and 2 describes use of carbon nanotube as a conductive agent of a negative electrode.

Since the Si-containing material causes large change in volume with charge and discharge, it is supposed that particles of the Si-containing material run off a conductive path of the negative electrode to be isolated with repeated charge and discharge, but addition of carbon nanotube to the negative electrode is expected to inhibit the isolation of the Si-containing material and improve the cycle characteristics.

### CITATION LIST

### PATENT LITERATURE

PATENT LITERATURE 1: Japanese Unexamined Patent Application Publication No. 2021-128845
PATENT LITERATURE 2: Japanese Unexamined Patent Application Publication No. 2021-128841

### SUMMARY

However, as a result of investigation by the present inventors, it has been revealed that addition of carbon nanotube may increase a surface area of the negative electrode, leading to increased side reactions on the negative electrode, which may consequently increase internal resistance of the battery, resulting in deterioration of the cycle characteristics.

A non-aqueous electrolyte secondary battery according to the present disclosure is a non-aqueous electrolyte secondary battery comprising: a positive electrode; a negative electrode; and a non-aqueous electrolyte, wherein the negative electrode includes graphite, a Si-containing material, and carbon nanotube, and the non-aqueous electrolyte includes at least one selected from the group consisting of a first compound represented by the following formula 1 and a second compound represented by the following formula 2, 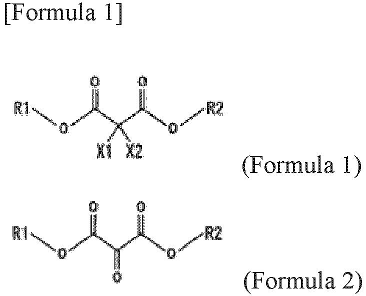 wherein R1 and R2 independently represent an alkyl group having less than or equal to 5 carbon atoms, and X1 and X2 independently represent an alkyl group having less than or equal to 5 carbon atoms, a halogen atom, or a hydrogen atom.

According to an aspect of the present disclosure, the excellent cycle characteristics can be achieved in the non-aqueous electrolyte secondary battery comprising the negative electrode including the Si-containing material and carbon nanotube. The non-aqueous electrolyte secondary battery according to the present disclosure has the high capacity and the excellent cycle characteristics, for example.

### BRIEF DESCRIPTION OF DRAWING

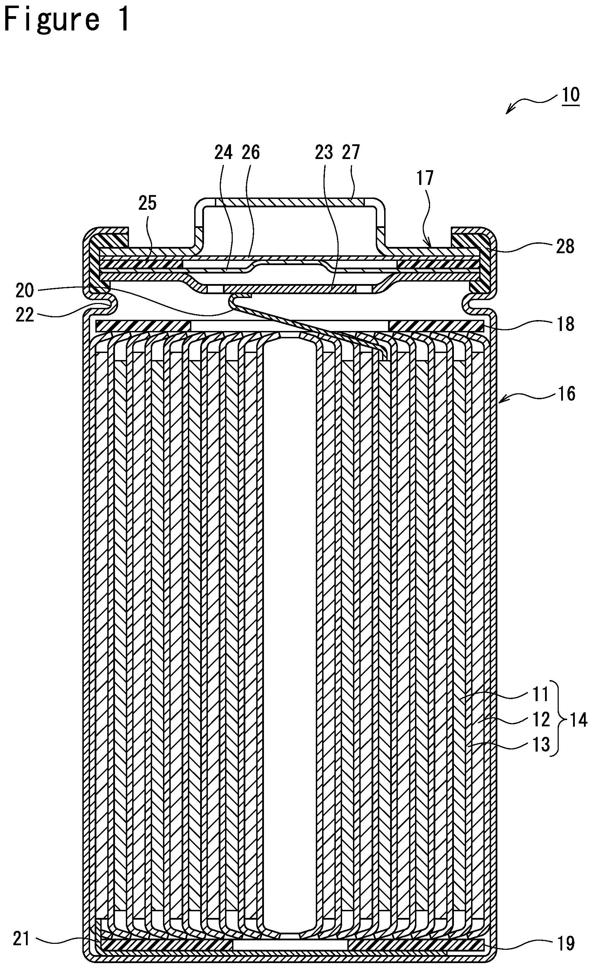

FIG. 1 is a sectional view of a non-aqueous electrolyte secondary battery of an example of an embodiment.

### DESCRIPTION OF EMBODIMENTS

It is an important challenge to achieve both a high capacity and excellent cycle characteristics of a non-aqueous electrolyte secondary battery such as a lithium-ion battery. Since a Si-containing material can occlude a large amount of lithium ions compared with graphite, use of the Si-containing material for a negative electrode active material can attempt to increase the capacity of the battery. However, the Si-containing material causes large change in volume with charge and discharge as noted above, and conversely deteriorates the cycle characteristics.

It has been proposed to add carbon nanotube (CNT) to a negative electrode in order to inhibit the deterioration of the cycle characteristics of the battery; however, as a result of investigation by the present inventors, it has been found that this method cannot yield a sufficient effect of improving the cycle characteristics. Alternatively, addition of CNT may conversely deteriorate the cycle characteristics. This is presumably because adding CNT increases a surface area of the negative electrode to increase side reactions on the negative electrode. For example, the increase in the side reactions on the negative electrode increases a positive electrode charge potential, which enhances deterioration of a positive electrode active material, resulting in increase in internal resistance of the battery. As a result, the cycle characteristics are presumed to deteriorate.

The present inventors have made intensive investigation to achieve both high capacity and excellent cycle characteristics, and consequently ascertained that the cycle characteristics of the battery are specifically improved by using graphite, a Si-containing material, and CNT in combination in a negative electrode and by adding at least one of the above first and second compounds to a non-aqueous electrolyte. If CNT is not used for the negative electrode, the effect of improving the cycle characteristics is not obtained even when adding the above first and second compounds are added to the non-aqueous electrolyte. Only when the above first and second compounds and CNT are both present, the large improving effect can be obtained.

In the non-aqueous electrolyte secondary battery according to the present disclosure, it is presumed that CNT inhibits isolation of the Si-containing material, and the above first and second compounds inhibit disadvantage by the use of CNT. The first and second compounds form a strong protective coating on the positive electrode surface, and this coating protects the positive electrode active material to inhibit increase in resistance. As a result, it is considered the cycle characteristics of the battery are largely improved.

Hereinafter, an example of an embodiment of the non-aqueous electrolyte secondary battery according to the present disclosure will be described in detail with reference to the drawing. Note that the scope of the present disclosure includes a configuration composed of selective combination of constituents of a plurality of embodiments and modified examples described hereinafter.

Hereinafter, a cylindrical battery housing a wound electrode assembly 14 in a bottomed cylindrical outer can 16 will be exemplified, but the exterior of the battery is not limited to the cylindrical outer can. The non-aqueous electrolyte secondary battery according to the present disclosure may be, for example, a rectangular battery comprising a rectangular exterior hosing can, a coin-shaped battery comprising a coin-shaped outer can, or a laminate battery comprising an exterior composed of a laminate sheet including a metal layer and a resin layer. The electrode assembly is not limited to the wound electrode assembly, and may be a stacked electrode assembly in which a plurality of positive electrodes and a plurality of negative electrodes are alternately stacked via a separator.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, an electrolyte, and the outer can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The outer can 16 is a bottomed cylindrical metallic container having an opening on one side in an axial direction, and the opening of the outer can 16 is sealed with a sealing assembly 17. Hereinafter, for convenience of description, the sealing assembly 17 side of the battery will be described as the upper side, and the bottom side of the outer can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and, for example, disposed to sandwich the positive electrode 11. The electrode assembly 14 has: a positive electrode lead 20 connected to the positive electrode 11 by welding or the like; and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the outer can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the outer can 16 by welding or the like, and the outer can 16 becomes a negative electrode terminal.

A gasket 28 is provided between the outer can 16 and the sealing assembly 17 to achieve sealability inside the battery. On the outer can 16, a grooved portion 22 in which part of a side wall thereof projects inside for supporting the sealing assembly 17 is formed. The grooved portion 22 is preferably formed in a circular shape along a circumferential direction of the outer can 16, and supports the sealing assembly 17 with the upper surface thereof. The sealing assembly 17 is fixed on the upper part of the outer can 16 with the grooved portion 22 and with an end of the opening of the outer can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, the separator 13, and the non-aqueous electrolyte, specifically the negative electrode 12 and the non-aqueous electrolyte, will be described in detail with reference to FIG. 2.

### [Positive Electrode]

The positive electrode 11 has a positive electrode core and a positive electrode mixture layer formed on the positive electrode core. For the positive electrode core, a foil of a metal stable within a potential range of the positive electrode 11, such as aluminum and an aluminum alloy, a film in which such a metal is disposed on a surface layer, or the like may be used. The positive electrode mixture layer includes a positive electrode active material, a conductive agent, and a binder, and is preferably formed on both surfaces of the positive electrode core except for an exposed portion where a positive electrode lead 20 is to be welded. The positive electrode 11 may be produced by, for example, applying a positive electrode mixture slurry including the positive electrode active material, the conductive agent, and the binder on the positive electrode core, and drying and then compressing the coating film to form the positive electrode mixture layer on both surfaces of the positive electrode core.

The positive electrode mixture layer includes lithium-metal composite oxide particles as the positive electrode active material. The lithium-metal composite oxide is a composite oxide containing metal elements such as Co, Mn, Ni, and Al, in addition to Li. The metal element constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from the group consisting of Co, Ni, and Mn is preferably contained. An example of a preferable composite oxide is a lithium-metal composite oxide containing Ni, Co, and Mn, or a lithium-metal composite oxide containing Ni, Co, and Al.

Examples of the conductive agent included in the positive electrode mixture layer may include carbon materials such as carbon black such as acetylene black and Ketjenblack, graphite, CNT, carbon nanofiber, and graphene. Examples of the binder included in the positive electrode mixture layer may include fluorine-containing resins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like.

### [Negative Electrode]

The negative electrode 12 has a negative electrode core and a negative electrode mixture layer formed on the negative electrode core. For the negative electrode core, a foil of a metal stable within a potential range of the negative electrode 12, such as copper and a copper alloy, a film in which such a metal is disposed on a surface layer, or the like may be used. The negative electrode mixture layer includes graphite, a Si-containing material, and CNT. The graphite and the Si-containing material function as a negative electrode active material, and the CNT functions as a conductive agent. The negative electrode mixture layer further includes a binder, and is preferably provided on both surfaces of the negative electrode core except for a current collector exposed portion, which is a portion where a negative electrode lead is to be connected. The negative electrode 12 may be produced by applying a negative electrode mixture slurry including the negative electrode active material, the binder, and the conductive agent on surfaces of the negative electrode core, and drying and then compressing the coating film to form the negative electrode mixture layer on both surfaces of the negative electrode core.

The negative electrode 12 can achieve good cycle characteristics while attempting the capacity increase by using the graphite and the Si-containing material in combination as the negative electrode active material. Further, a synergistic effect of the CNT and the specific compound added to the non-aqueous electrolyte can effectively improve the cycle characteristics of the battery. A content of the Si-containing material is preferably greater than or equal to 4 mass% and less than or equal to 50 mass%, and more preferably greater than or equal to 6 mass% and less than or equal to 20 mass% based on a mass of the negative electrode active material from the viewpoints of the capacity increase and the like. The constitution of the present embodiment is particularly effective when the content of the Si-containing material is greater than or equal to 4 mass%. The negative electrode 12 includes, for example, substantially only the graphite and the Si-containing material as the negative electrode active material. In this case, a content of the graphite is preferably greater than or equal to 50 mass% and less than or equal to 96 mass% based on the mass of the negative electrode active material.

The graphite may be any of: artificial graphite such as massive artificial graphite (MAG) and graphitized mesophase carbon microbead (MCMB); and natural graphite such as flake graphite, massive graphite, and amorphous graphite. The graphite is, for example, at least one selected from the group consisting of the artificial graphite and the natural graphite. A median diameter (D50) of the graphite on a volumetric basis is, for example, greater than or equal to 1 µm and less than or equal to 30 µm, and preferably greater than or equal to 5 µm and less than or equal to 25 µm. The D50 means a particle diameter at which a cumulative frequency is 50% from a smaller particle diameter side in a particle size distribution on a volumetric basis. The particle size distribution of the negative electrode active material can be measured by using a laser diffraction-type particle size distribution measuring device (for example, MT3000II, manufactured by MicrotracBEL Corp.) with water as a dispersion medium.

The Si-containing material may be any material containing Si, and an example thereof include a silicon alloy, a silicon compound, and a composite material containing Si. A preferable composite material is of composite particles including an ion-conductive layer and Si particles dispersed in the ion-conductive layer. On surfaces of the composite particles containing Si, a conductive layer may be formed. The ion-conductive layer is, for example, at least one selected from the group consisting of a silicon oxide phase, a silicate phase, and a carbon phase. The ion-conductive layer is a matrix phase constituted with aggregation of particles finer than the Si particles. The Si-containing material may be used singly, or may be used in combination of two or more.

An example of the Si-containing material is of composite particles having a sea-island structure in which fine Si particles are substantially uniformly dispersed in an amorphous silicon oxide phase, and represented by the general formula SiOₓ (0<x≤2) as an entirety. A main component of the silicon oxide may be silicon dioxide. A content ratio "x" of oxygen to silicon is, for example, 0.5≤x<2.0, and preferably 0.8≤x≤1.5. D50 of the composite particles is typically smaller than D50 of the graphite. The D50 of the composite particles is, for example, greater than or equal to 1 µm and less than or equal to 15 µm.

Another example of the Si-containing material is of composite particles having a sea-island structure in which fine Si particles are substantially uniformly dispersed in a silicate phase or a carbon phase. The silicate phase includes, for example, at least one selected from the group consisting of alkali metal elements and group II elements in the periodic table. The silicate phase may include at least one selected from the group consisting of B, Al, Zr, Nb, Ta, V, Y, Ti, P, Bi, Zn, Sn, Pb, Sb, Co, Er, F, W, and lanthanoids. The carbon phase may be a phase of amorphous carbon. The amorphous carbon is a carbon material having an average face interval of a (002) face of greater than 0.34 nm measured by X-ray diffraction.

A preferable silicate phase is a lithium silicate phase containing Li. Use of composite particles including the lithium silicate phase reduces an irreversible capacity to yield good initial charge-discharge efficiency. The lithium silicate phase is, for example, a phase of a composite oxide represented by the general formula Li_{2z}SiO_{(2+z)} (0<z<2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

The conductive layer formed on the surfaces of the composite particles is, for example, a carbon coating composed of a conductive carbon material. For the conductive carbon material, carbon black such as acetylene black and Ketjenblack, graphite, amorphous carbon with low crystallinity, and the like may be used. A thickness of the conductive layer is preferably greater than or equal to 1 nm and less than or equal to 200 nm, or greater than or equal to 5 nm and less than or equal to 100 nm with considering achievement of the conductivity and diffusibility of lithium ions toward particle insides. A thickness of the conductive layer may be measured by sectional observation of the composite particles using a scanning electron microscope (SEM) or a transmission electron microscope (TEM).

For the binder included in the negative electrode mixture layer, a fluororesin, PAN, a polyimide, an acrylic resin, a polyolefin, and the like may be used as in the case of the positive electrode 11, but styrene-butadiene rubber (SBR) is preferably used. The negative electrode mixture layer preferably includes CMC or a salt thereof, polyacrylic acid (PAA) or a salt thereof, polyvinyl alcohol (PVA), and the like. Among these, SBR; and CMC or a salt thereof, or PAA or a salt thereof are preferably used in combination. A content of the binder is, for example, greater than or equal to 0.1 mass% and less than or equal to 5 mass% based on the mass of the negative electrode mixture layer.

The negative electrode mixture layer includes at least the CNT as the conductive agent. The CNT effectively inhibits generation of the negative electrode active material isolated from a conductive path, and improves the battery characteristics such as cycle characteristics. A content of the CNT is preferably greater than or equal to 0.005 mass% and less than or equal to 0.5 mass%, and more preferably greater than or equal to 0.01 mass% and less than or equal to 0.1 mass% based on the mass of the negative electrode active material. A preferable content of the CNT based on a mass of the negative electrode mixture layer is similar to the above. When the content of the CNT is within this range, the effect of improving the cycle characteristics becomes more remarkable.

The CNT may be any of single-wall CNT (SWCNT) and multi-walled CNT (MWCNT), and preferably SWCNT. The single-wall CNT is also called a single-walled CNT. Use of SWCNT, which provides a large number of presence per surface area of the active material compared with use of MWCNT, forms a larger amount of conductive path. As a result, isolation of the active material due to cutting off of the conductive path hardly occurs, and the effect of improving the cycle characteristics becomes more remarkable. For the negative electrode mixture layer, a conductive agent other than the CNT may be used in combination, and for example, a particle carbon material such as carbon black or a fiber carbon material other than the CNT may be included. Alternatively, the negative electrode mixture layer may include substantially only the CNT as the conductive agent.

SWCNT preferably has a BET specific surface area of greater than or equal to 800 m²/g. Use of SWCNT having a BET specific surface area of greater than or equal to 800 m²/g tends to form good conductive path compared with use of SWCNT having a BET specific surface area of less than 800 m²/g, and the effect of improving the cycle characteristics becomes more remarkable. An upper limit of the BET specific surface area is not particularly limited, but an example thereof is 1800 m²/g. The BET specific surface area is measured in accordance with the BET method (nitrogen adsorption method) described in JIS R1626.

An average diameter of the CNT is, for example, less than or equal to 50 nm, preferably less than or equal to 40 nm, and more preferably less than or equal to 25 nm. A lower limit of the average diameter of the CNT is not particularly limited, and an example thereof is 1 nm. An average fiber length of the CNT is, for example, greater than or equal to 0.5 µm, preferably greater than or equal to 0.7 µm, and more preferably greater than or equal to 0.8 µm. An upper limit of the average fiber length of the CNT is not particularly limited, and an example thereof is 10 µm.

### [Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, and polypropylene, cellulose, and the like are preferable. The separator 13 may have a single-layer structure or a multilayer structure. On a surface of the separator 13, a resin layer having high heat resistance, such as an aramid resin, may be formed.

On a boundary between the separator 13 and at least one selected from the positive electrode 11 and the negative electrode 12, a filler layer including an inorganic filler may be formed. Examples of the inorganic filler include oxides containing metal elements such as Ti, Al, Si, and Mg, and a phosphoric acid compound. The filler layer may be formed by applying a slurry containing the filler on the surface of the positive electrode 11, the negative electrode 12, or the separator 13.

### [Non-Aqueous Electrolyte]

The non-aqueous electrolyte includes a non-aqueous solvent and an electrolyte salt. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate. Among them, at least one selected from EC, EMC, and DMC is preferably used, and a mixed solvent of EC, EMC, and DMC is particularly preferably used.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The non-aqueous electrolyte further includes at least one selected form the group consisting of a first compound represented by the following formula 1 (hereinafter, referred to as "compound A") and a second compound represented by the following formula 2 (hereinafter, referred to as "compound B"), 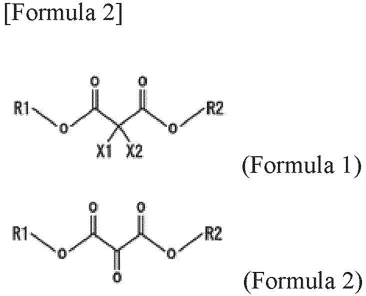 wherein R1 and R2 independently represent an alkyl group having less than or equal to 5 carbon atoms, and X1 and X2 independently represent an alkyl group having less than or equal to 5 carbon atoms, a halogen atom, or a hydrogen atom.

Specific examples of the alkyl group having less than or equal to 5 carbon atoms include a methyl group, an ethyl group, an n-propyl group, an i-propyl group, an n-butyl group, a sec-butyl group, a tert-butyl group, an i-pentyl group, a neopentyl group, a sec-pentyl group, a tert-pentyl group, and a 3-pentyl group. Among them, an alkyl group having less than or equal to 3 carbon atoms is preferable, and an alkyl group having less than or equal to 2 carbon atoms (a methyl group or an ethyl group) is more preferable. R1 and R2 may represent alkyl groups same as each other, or may represent alkyl groups different from each other. The halogen atom is preferably F.

The non-aqueous electrolyte preferably includes at least one selected from the group consisting of dimethyl malonate (DMM), diethyl malonate (DEM), diethyl fluoromalonate (DEFM), and diethyl ketomalonate (DEKM) as the compound A or B. DMM, DEM, and DEFM are the compound A, and DEKM is the compound B. To the non-aqueous electrolyte, two types of more of the compound A or the compound B may be added, or both the compounds A and B may be added. Use of these compounds makes the effect of improving the cycle characteristics more remarkable. Among them, DMM is preferably used.

Although the compounds A and B contribute to improvement of the cycle characteristics even at a small amount, the content is preferably decided based on the mass of the CNT included in the battery. The content of the compounds A and B is preferably greater than or equal to 0.5 mass% and less than or equal to 70 mass%, more preferably greater than or equal to 2 mass% and less than or equal to 50 mass%, and particularly preferably greater than or equal to 5 mass% and less than or equal to 40 mass% of the mass of the CNT. When a plurality of types of the compounds A and B is added, a total amount thereof is preferably greater than or equal to 5 mass% and less than or equal to 70 mass% of the mass of the CNT. In this case, side reactions caused by the CNT may be efficiently inhibited, and the effect of improving the cycle characteristics becomes more remarkable.

In other words, the CNT is preferably present at an amount of greater than or equal to 1.5 times and less than or equal to 20 times, more preferably present at an amount of greater than or equal to 2.5 times and less than or equal to 5 times larger than the mass of the compounds A and B. The content of the compounds A and B based on the mass of the non-aqueous electrolyte is not particularly limited, and an example thereof is greater than or equal to 0.01 mass% and less than or equal to 5 mass% or greater than or equal to 0.1 mass% and less than or equal to 2 mass%. In this case, the effect of inhibiting side reactions is improved to easily attempt to improve the cycle characteristics.

When the content (g) of the compounds A and B is defined as X and a BET specific surface area (m²/g) of the SWCNT is defined as Y, a requirement of (X/Y) × 100 ≤ 0.02 is preferably satisfied. When this requirement is satisfied, the effect of improving the cycle characteristics increases compared with a case where this requirement is not satisfied. That is, there is a preferable requirement between the content of the compounds A and B and the BET specific surface area of the SWCNT in terms of improvement of the cycle characteristics. A lower limit of X/Y is not particularly limited, and an example thereof is (X/Y) × 100 ≥ 0.001.

The electrolyte salt is preferably a lithium salt. An examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m represent integers of greater than or equal to 0}. For the lithium salt, one of them may be used, or a plurality of types thereof may be used in combination. Among them, LiPF₆ is preferable. A concentration of the lithium salt is, for example, greater than or equal to 0.8 mol and less than or equal to 4 mol per litter of the non-aqueous solvent.

### EXAMPLES

Hereinafter, the present disclosure will be further described with Examples, but the present disclosure is not limited to these Examples.

### <Example 1>

### [Production of Positive Electrode]

As a positive electrode active material, a lithium-transition metal composite oxide represented by the general formula LiNi_{0.82}Co_{0.15}Al_{0.03}O₂ was used. This positive electrode active material, acetylene black, and polyvinylidene fluoride were mixed at a solid-content mass ratio of 98:1:1, and N-methyl-2-pyrrolidone (NMP) was used as a dispersion medium to prepare a positive electrode mixture slurry. Then, the positive electrode mixture slurry was applied on both surfaces of a positive electrode core composed of aluminum foil, the coating film was dried and compressed, and then the positive electrode core was cut to a predetermined electrode size to obtain a positive electrode in which a positive electrode mixture layer was formed on both the surfaces of the positive electrode core.

### [Production of Negative Electrode]

As a negative electrode active material, a mixture in which graphite and a Si-containing material represented by SiO_{X} (X=1) was mixed at a mass ratio of 92:8 was used. This negative electrode active material, SWCNT (diameter: 1.5 nm, length: greater than or equal to 4 µm), a dispersion of styrene-butadiene rubber (SBR), and a sodium salt of carboxymethylcellulose were mixed at a solid-content mass ratio of 98:0.02: 1: 1, and water was used as a dispersion medium to prepare a negative electrode mixture slurry. Then, the negative electrode mixture slurry was applied on both surfaces of a negative electrode core composed of copper foil, the coating film was dried and compressed, and then the negative electrode core was cut to a predetermined electrode size to obtain a negative electrode in which a negative electrode mixture layer was formed on both the surfaces of the negative electrode core.

### [Preparation of Non-Aqueous Electrolyte Liquid]

To a mixed solvent in which ethylene carbonate and ethyl methyl carbonate were mixed at a volume ratio (25°C) of 3:7, LiPF₆ and dimethyl malonate (DMM) were added to obtain a non-aqueous electrolyte liquid. At this time, a concentration of LiPF₆ was adjusted to 1.2 mol/L, and a concentration of DMM was adjusted to 1.0 mass%.

### [Production of Test Cell]

The above positive electrode to which a lead made of aluminum was welded and the above negative electrode to which a lead made of nickel was welded were spirally wound via a separator to produce a wound electrode assembly. This electrode assembly was housed in a bottomed cylindrical outer can, the non-aqueous electrolyte liquid was injected, and then an opening of the outer can was sealed with a sealing assembly via a gasket to obtain a test cell (non-aqueous electrolyte secondary battery). In the test cell of Example 1, a mass ratio between SWCNT and DMM in the non-aqueous electrolyte liquid was 3.3:1.

### <Example 2>

A test cell was produced in the same manner as in Example 1 except that, in the preparation of the non-aqueous electrolyte liquid, diethyl malonate (DEM) was used instead of DMM.

### <Example 3>

A test cell was produced in the same manner as in Example 1 except that, in the preparation of the non-aqueous electrolyte liquid, diethyl fluoromalonate (DEFM) was used instead of DMM.

### <Example 4>

A test cell was produced in the same manner as in Example 1 except that, in the preparation of the non-aqueous electrolyte liquid, diethyl ketomalonate (DEKM) was used instead of DMM.

### <Comparative Example 1>

A test cell was produced in the same manner as in Example 1 except that, in the preparation of the non-aqueous electrolyte liquid, DMM was not added.

### <Comparative Example 2>

A test cell was produced in the same manner as in Example 1 except that, in the preparation of the non-aqueous electrolyte liquid, DMM was not added.

The test cell of each of Examples and each of Comparative Examples was subjected to performance evaluation by the following methods. Table 1 shows the evaluation results together with constitution of the negative electrode and the non-aqueous electrolyte liquid. DCIR shown in Table 1 is a value relative to DCIR of the test ell of Comparative Example 1 being 100%.

### [Evaluation of Direct-Current Resistance (DCIR)]

Under a temperature environment of 25°C, the evaluation target battery was charged at a constant current of 0.3 C until a state of charge (SOC) reached 50%, and after the SOC reached 50%, the battery was charged at a constant voltage until a current value reached 0.02 C. Thereafter, the battery was discharged at a constant current of 0.3 C until a battery voltage reached 2.5 V. This charge-discharge cycle was performed 300 times, and then the battery was discharged at a constant current of 0.1 C at a constant voltage for 10 seconds. A difference between an open circuit voltage (OCV) and a closed circuit voltage (CCV) after 10 seconds from the discharge was divided by the discharge current after 10 seconds from the discharge to calculate (DCIR).

### [Evaluation of Cycle Characteristics (Capacity Retention)]

Under a temperature environment of 25°C, the evaluation target battery was charged and discharged under the following conditions to determine capacity retention.

### (Charge-Discharge Condition)

Charge: The battery was charged at a constant current of 0.3 C until a battery voltage reached 4.2 V. Further, the battery was charged at a constant voltage of 4.2 V until a current value reached 70 mA.

Discharge: The battery was discharged at a constant current of 1750 mA until the voltage reached 2.5 V.

This charge and discharge was performed with 300 cycles, and the capacity retention was calculated with the following formula. Capacity retention (%) = (Discharge capacity at 300th cycle / Discharge capacity at 1st cycle) × 100

**[Table 1]**

| | Electrolyte liquid additive | CNT type | Additive / CNT | DCIR | BET specific surface area | (X/Y) x 100 | Capacity retention |
|---|---|---|---|---|---|---|---|
| Example 1 | DMM | SW | 0.3 | 98.4 | 1200 | 0.006 | 86.2% |
| Example 2 | DEM | SW | 0.3 | 98.6 | 1200 | 0.006 | 85.7% |
| Example 3 | DEFM | SW | 0.3 | 98.6 | 1200 | 0.006 | 85.4% |
| Example 4 | DEFM | SW | 0.3 | 98.6 | 1200 | 0.006 | 85.3% |
| Comparative Example 1 | - | SW | 0.3 | 100 | 1200 | 0.006 | 85.1% |
| Comparative Example 2 | DMM | - | - | 100.9 | - | - | 83.4% |

As shown in Table 1, all the test cells of Examples 1 to 4 have low DCIR after the cycle test and high capacity retention compared with the test cells of Comparative Examples 1 and 2. That is, the test cells of Examples 1 to 4 in which the negative electrode mixture layer includes the CNT and the compound A or the compound B (electrolyte liquid additive) is present in the non-aqueous electrolyte liquid have low resistance and excellent cycle characteristics compared with the test cell of Comparative Example 1, which includes the CNT and does not include the compounds A and B, and the test cell of the Comparative Example 2, which includes the compounds A and B and does not include the CNT.

### REFERENCE SIGNS LIST

10 Non-aqueous electrolyte secondary battery, 11 Positive electrode, 12 Negative electrode, 13 Separator, 14 Electrode assembly, 16 Outer can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A non-aqueous electrolyte secondary battery, comprising:
a positive electrode;
a negative electrode; and
a non-aqueous electrolyte, wherein
the negative electrode includes graphite, a Si-containing material, and carbon nanotube, and
the non-aqueous electrolyte includes at least one selected from the group consisting of a first compound represented by the following formula 1 and a second compound represented by the following formula 2, 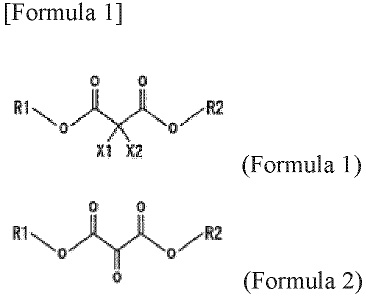
wherein R1 and R2 independently represent an alkyl group having less than or equal to 5 carbon atoms, and X1 and X2 independently represent an alkyl group having less than or equal to 5 carbon atoms, a halogen atom, or a hydrogen atom.

2. The non-aqueous electrolyte secondary battery according to claim 1, wherein the non-aqueous electrolyte includes at least one selected from the group consisting of dimethyl malonate, diethyl malonate, diethyl fluoromalonate, and diethyl ketomalonate, as the first compound.

3. The non-aqueous electrolyte secondary battery according to claim 1 or 2, wherein a content of the Si-containing material is greater than or equal to 4 mass% and less than or equal to 50 mass% based on a mass of the negative electrode active material.

4. The non-aqueous electrolyte secondary battery according to any one of claims 1 to 3, wherein a content of the carbon nanotube is greater than or equal to 0.005 mass% and less than or equal to 0.5 mass% based on the mass of the negative electrode active material.

5. The non-aqueous electrolyte secondary battery according to any one of claims 1 to 4, wherein the carbon nanotube is single-wall carbon nanotube.

6. The non-aqueous electrolyte secondary battery according to claim 5, wherein the single-wall carbon nanotube has a BET specific surface area of greater than or equal to 800 m²/g.

7. The non-aqueous electrolyte secondary battery according to any one of claims 1 to 6, wherein a content of the first and second compounds is greater than or equal to 0.5 mass% and less than or equal to 70 mass% based on a mass of the carbon nanotube.

8. The non-aqueous electrolyte secondary battery according to any one of claims 1 to 7, wherein
the carbon nanotube is single-wall carbon nanotube, and
when a content (g) of the first and second compounds is defined as X and a BET specific surface area (m²/g) of the single-wall carbon nanotube is defined as Y, (X/Y) × 100 ≤ 0.02 is satisfied.
